# EUROPÄISCHE PATENTSCHRIFT

(11) **EP 3 534 498 B1**
(45) Veröffentlichungstag und Bekanntmachung des Hinweises auf die Patenterteilung: **26.05.2021**
(21) Anmeldenummer: 19160494.1
(22) Anmeldetag: 04.03.2019
(51) Int. Cl.: H02K 3/12, H02K 15/04, H02K 15/06

(54) **VERFAHREN UND VORRICHTUNG ZUM HERSTELLEN EINES STATORS MIT EINER WICKLUNG MIT GESCHRÄNKTEN LUFTSPULEN**
METHOD AND DEVICE FOR PRODUCING A STATOR WITH A COIL WITH SKEWED AIR COILS
PROCÉDÉ ET DISPOSITIF DE FABRICATION D'UN STATOR DOTÉ D'UN ENROULEMENT À BOBINES À AIR RÉDUITES

(30) Priorität: 02.03.2018 DE 102018104838
(43) Veröffentlichungstag der Anmeldung: 04.09.2019
(73) Patentinhaber: Aumann Espelkamp GmbH, 32339 Espelkamp (DE)
(72) Erfinder: LÜTTGE, Wolfgang, 31787 Hameln (DE); SELL-LE BLANC, Florian, 76185 Karlsruhe (DE); WEISSE, Lando, 10717 Berlin (DE); DUNKER, Alexander, 32351 Stemwede-Drohne (DE)
(74) Vertreter: Bittner, Thomas L.

(56) Entgegenhaltungen:
- EP-A2- 1 940 006
- EP-A2- 2 647 110
- US-A1- 2008 201 935
- US-A1- 2011 043 059

## Beschreibung

Die Erfindung betrifft ein Verfahren und eine Vorrichtung zum Herstellen eines Stators mit einer Wicklung mit geschränkten Luftspulen.

### Hintergrund

Im Dokument DE 11 2016 000 469 T5 sind eine Vorrichtung und ein Verfahren zum Herstellen eines Stators offenbart. Zuvor hergestellte Luftspulen werden in Haltenuten eines Haltewerkzeugs angeordnet, wobei die Haltenuten an dem Haltewerkzeug auf einer Kreisbahn umlaufend angeordnet sind. Danach wird das Haltewerkzeug im Inneren eines Statorkerns angeordnet, der nach radial innen offene Kernnuten aufweist. Die Luftspulen werden aus den Haltenuten an dem Haltewerkzeug in einer Richtung nach radial außen in die Kernnuten des Statorkerns verlagert, um dann den Statorkern mit den in den Kernnuten angeordneten Luftspulen vom Haltewerkzeug abzunehmen.

Das Dokument EP 1 940 006 A2 betrifft eine rotierende Maschinenanlage, bei der Spulen in einem minimierten Zustand verbundener Teile um einen Statorkern gewickelt werden können. In der rotierenden Maschinenanlage, die einen ringförmig ausgebildeten Stator und einen an der Innenumfangseite des Stators rotierbar angeordneten Rotor aufweist, umfasst der Stator einen Statorkern mit mehrere Schlitzen in Umfangsrichtung, die jeweils einen Spuleneinführungsabschnitt auf der inneren Umfangsseite aufweisen, und Spulen, die durch Überlappungswicklung innerhalb der Schlitze gewickelt sind.

Im Dokument US 2011 / 0 043 059 A1 ist ein Wechselstromgenerator für ein Kraftfahrzeug, insbesondere ein Dreiphasengenerator, mit einem Rotor mit Nord- und Südpolen, insbesondere mit Krallenpolfingern, die sich in axialer Richtung erstrecken und als Nord- und Südpole am Umfang des Rotors abwechseln, offenbart. Ein Stator weist einen Magnetkern, insbesondere einen laminierten Kern, mit Schlitzen und einer Statorwicklung auf, die in den Schlitzen des Magnetkerns angeordnet ist. Die Statorwicklung weist Wicklungsüberhänge auf, die durch einen annähernd radialen Luftstrom gekühlt werden können, der von mindestens einem am Rotor montierten Lüfter erzeugt wird. Der Stator befindet sich gegenüber dem Rotor und der Stator und der Rotor weisen relativ zueinander definierte Positionen auf. Die mehrphasige Statorwicklung besteht aus Wicklungselementen, wobei mindestens ein Wicklungselement mehr als zwei in Schlitze eingeführte Abschnitte aufweist und mindestens ein Wicklungselement mehr als einem Umkehrabschnitt aufweist, der eine Änderung der radialen Position bewirkt.

### Zusammenfassung

Aufgabe der Erfindung ist es, ein Verfahren und eine Vorrichtung zum Herstellen eines Stators mit einer Wicklung mit geschränkten Luftspulen anzugeben, bei denen die Wicklung mit den geschränkten Luftspulen an einem Statorkern auf einfache und effiziente Weise herstellbar ist.

Zur Lösung sind ein Verfahren sowie eine Vorrichtung zum Herstellen eines Stators mit einer Wicklung mit geschränkten Luftspulen nach den unabhängigen Ansprüchen 1 und 15 geschaffen. Ausgestaltungen sind Gegenstand von abhängigen Unteransprüchen.

Nach einem Aspekt ist ein Verfahren zum Herstellen eines Stators mit einer Wicklung mit geschränkten Luftspulen geschaffen. Hierbei werden Luftspulen mithilfe eines Wickelwerkzeugs gewickelt und dann in Haltenuten eines Fertigungswerkzeugs angeordnet, derart, dass bei den Luftspulen jeweils ein erster Abschnitt auf einer Seite der Luftspule in einer Haltenut einer ersten Anordnung von Haltenuten an einem ersten Werkzeugteil und ein zweiter Abschnitt auf einer gegenüberliegenden Seite der Luftspulen in einer Haltenut einer zweiten Anordnung von Haltenuten an einem zweiten Werkzeugteil angeordnet sind. Für die Luftspulen wird eine jeweilige Schränkung hergestellt, indem das erste und das zweite Werkzeugteil relativ zueinander verlagert werden. Die Luftspulen mit Schränkung werden in die Haltenuten des ersten Werkzeugteils verlagert, derart, dass für die Luftspule mit Schränkung der erste und der zweite Abschnitt jeweils in verschiedenen der Haltenuten des ersten Werkzeugteils angeordnet sind. Es wird ein Statorkern mit Kernnuten angeordnet, derart, dass die Kernnuten jeweils einer Haltenut des ersten Werkzeugteils gegenüberliegend angeordnet werden. Die Luftspulen mit Schränkung werden aus den Haltenuten des ersten Werkzeugteils in jeweils zugeordnete Kernnuten verlagert. Schließlich wird der Statorkern mit den in den Kernnuten angeordneten Luftspulen mit Schränkung entnommen.

Nach einem weiteren Aspekt ist eine Vorrichtung zum Herstellen eines Stator mit einer Wicklung mit geschränkten Luftspulen geschaffen. Die Vorrichtung weist ein Wickelwerkzeug auf, welches eingerichtet ist, Luftspulen zu wickeln. Es ist ein Fertigungswerkzeug mit einem ersten und einem zweiten Werkzeugteil vorgesehen, wobei das Fertigungswerkzeug wie folgt eingerichtet ist: Luftspulen in Haltenuten aufzunehmen, derart, dass bei den Luftspulen jeweils ein erster Abschnitt auf einer Seite der Luftspule in einer Haltenut einer ersten Anordnung von Haltenuten an einem ersten Werkzeugteil und ein zweiter Abschnitt auf einer gegenüberliegenden Seite der Luftspule in einer Haltenut einer zweiten Anordnung von Haltenuten an einem zweiten Werkzeugteil angeordnet sind; für die Luftspule eine jeweilige Schränkung auszubilden, indem das erste und das zweite Werkzeugteil relativ zueinander verlagerbar sind; die Luftspulen mit Schränkung in die Haltenuten des ersten Werkzeugteils zu verlagern, derart, dass für die Luftspulen mit Schränkung der erste und der zweite Abschnitt jeweils in verschiedenen der Haltenuten des ersten Werkzeugteils angeordnet sind; Kernnuten eines Statorkerns jeweils einer Haltenut des ersten Werkzeugteils gegenüberliegend anzuordnen; die Luftspulen mit Schränkung aus den Haltenuten des ersten Werkzeugteils in jeweils zugeordnete Kernnuten zu verlagern und den Statorkern mit den in den Kernnuten angeordneten Luftspulen mit Schränkung zu entnehmen.

Beim Verlagern oder Übergeben der Luftspulen mit Schränkung in den Statorkern kann vorgesehen sein, mehrere Wickelschichten in den Kernnuten auszubilden, insbesondere zwei Wickelschichten, derart, dass pro Kernnut wenigstens ein erster und ein zweiter Abschnitt unterschiedlicher Luftspulen mit Schränkung angeordnet wird.

Das Verlagern der Luftspulen mit Schränkung aus den Haltenuten des ersten Werkzeugteils in die Kernnuten kann mit einem pro Nut zugeordneten Schieberelement ausgeführt werden. Beim Anordnen der Luftspulen mit Schränkung an dem Statorkern verbleiben endseitige Abschnitte der Luftspulen, welche den ersten Abschnitt und den zweiten Abschnitt verbinden, jeweils am Statorkern stirnseitig außerhalb der Kernnuten.

Beim Schränken der Luftspulen werden diese auf eine jeweilige Spulenbreite geschränkt, mit der die Luftspulen dann am Statorkern angeordnet werden.

Beim Entnehmen des Statorkerns kann dieser aus dem ersten Werkzeugteil herausgenommen werden, insbesondere in axialer Richtung.

Der Statorkern kann mit einem Blechpaket gebildet sein.

Bei der hergestellten Wicklung kann vorgesehen sein, dass jede Spule einen Schichtwechsel von einer Ober- zu einer Unterwicklung vollzieht. Hierdurch entsteht eine geometrisch in sich geschlossene Kontur.

Die ersten Abschnitte können auf der einen Seite der Luftspulen in Haltenuten einer ersten auf einer Kreisbahn umlaufenden Anordnung von Haltenuten an dem ersten Werkzeugteil angeordnet werden, und die zweiten Abschnitte können auf der gegenüberliegenden Seite der Luftspule in Haltenuten einer zweiten auf einer Kreisbahn umlaufenden Anordnung von Haltenuten an dem zweiten Werkzeugteil angeordnet werden. Die erste auf einer Kreisbahn umlaufende Anordnung von Haltenuten kann radial innenliegend in Bezug zu der auf der zweiten Kreisbahn umlaufenden Anordnung von Haltenuten angeordnet sein. Das zweite Werkzeugteil kann in dieser oder anderen Ausführungsformen das erste Werkzeugteil vollständig umgreifen.

Die Luftspulen können beim Anordnen der Luftspulen in den Haltenuten des Fertigungswerkzeugs in radialer Richtung verlagert werden. Die Luftspulen können beim Anordnen in den Haltenuten des Fertigungswerkzeugs mittels einer Bewegung nach radial innen in den Haltenuten des ersten Werkzeugteils angeordnet werden. Beim Verlagern der Luftspulen mit Schränkung aus dem ersten Werkzeugteil in die Kernnuten des Statorkerns kann eine Verlagerung nach radial außen vorgesehen sein. Auch eine Kombination einer Bewegung in radialer Richtung und einer Bewegung in axialer Richtung kann in alternativen Ausführungsformen vorgesehen sein.

Beim Anordnen der Luftspulen können in den Haltenuten des Fertigungswerkzeugs die Haltenuten des ersten Werkzeugteils und die Haltenuten des zweiten Werkzeugteils einander paarweise zugeordnet werden. Die Haltenuten können in radialer Richtung fluchtend angeordnet sein, insbesondere einander gegenüberliegende Nutöffnungen, die sich in axialer Richtung erstrecken können.

Beim Anordnen der Luftspulen können in den Haltenuten des Fertigungswerkzeugs die Haltenuten des ersten Werkzeugteils und die Haltenuten des zweiten Werkzeugteils im Wesentlichen spaltfrei einander gegenüberliegend angeordnet werden.

Das erste Werkzeugteil und das zweite Werkzeugteil können in das Fertigungswerkzeug mittels Relativverlagerung in axialer Richtung zusammengefügt werden. Eine ähnliche Relativverlagerung kann beim Trennen von erstem und zweitem Werkzeugteil vorgesehen sein.

Beim Anordnen des Statorkerns können der Statorkern und das erste Werkzeugteil in axialer Richtung relativ zueinander verlagert werden. Auf diese Weise können Statorkern und erstes Werkzeugteil in einer Ausführungsform mittels Bewegen in axialer Richtung ineinander gesteckt werden, insbesondere wird das Werkzeugteil hierbei in dem Statorkern eingeführt.

Die Relativdrehung von erstem und zweitem Werkzeugteil führt zum Schränken der Luftspulen, die mit ihrem ersten und zweiten Abschnitt (Spulenschenkeln) in den Haltenuten der Werkzeugteile gehalten werden.

Das erste Werkzeugteil und das zweite Werkzeugteil können beim Herstellen der jeweiligen Schränkung für die Luftspulen um eine Rotationsachse relativ zueinander gedreht werden. Die Weite der Relativdrehung kann sich an der Spulenweite im Statorkern orientieren.

Die Luftspulen mit Schränkung können in den Kernnuten gegenüber dem Statorkern elektrisch isoliert werden. Zum elektrischen Isolieren der Luftspulen kann beispielsweise Isolierpapier verwendet werden. Die elektrische Isolierung überlappt hierbei mit der Oberfläche der Luftspule wenigstens teilweise. Beispielsweise kann die elektrische Isolierung an der Luftspule mit Schränkung über einen Bereich ausgebildet sein, welcher im Wesentlichen der Längserstreckung der Kernnuten des Statorkerns entspricht.

Die Luftspulen können vor dem Ausbilden der Schränkung mit der elektrischen Isolierung versehen und in den Haltenuten des Fertigungswerkzeugs mit der elektrischen Isolierung eingebracht werden. Die elektrische Isolierung verbleibt dann an den Luftspulen, wenn diese geschränkt und weiter verarbeitet werden. Alternativ oder ergänzend kann vorgesehen sein, in den Haltenuten eine Isolation auszubilden, wobei die Luftspulen ohne Isolation verarbeitet werden können.

Der erste und / oder der zweite Abschnitt der Luftspule mit Schränkung kann nach dem Verlagern in die Kernnuten in diesen verformt werden. Das Verformen der Abschnitte der Luftspule kann mittels Pressen ausgeführt werden. Hierzu kann vorgesehen sein, zum Verformen einen Pressstempel in die jeweilige Kernnut zu verlagern, wobei der Presstempel beispielsweise mit dem Schieberelement gebildet sein kann, welches genutzt wird, um die Luftspule in der zugeordneten Kernnut einzubringen. Bei dem Verformen können sich die Abschnitte der Luftspule in der Kernnut an deren innere Kontur anpassen.

In den Kernnuten kann mittels der Luftspulen mit Schränkung eine Zweischichtwicklung ausgebildet werden. Auch mehr als zwei Wicklungen können vorgesehen sein. In radialer Richtung können pro Kernnut mindestens jeweils ein erster und ein zweiter Abschnitt von unterschiedlichen Luftspulen mit Schränkung angeordnet sein, um die Schichtwicklung auszubilden. In der jeweiligen Kernnut wird eine radial außenliegende Schicht gebildet, worauf eine radial innenliegende Schicht hergestellt wird, wobei bei der jeweiligen Schichtausbildung gleiche oder verschiedene Arbeitsschritte vorgesehen sein können, beispielsweise das Verformen.

Als zweites Werkzeugteil kann eine Übergabekette verwendet werden, bei der die zweite Anordnung von Haltenuten zwischen einer geradlinigen Anordnung und einer radial umlaufenden Anordnung verlagerbar ist.

Nutsprünge der Luftspulen, die den Abstand zwischen den verschiedenen Kernnuten charakterisieren, in denen die Abschnitte der Luftspule am Statorkern angeordnet sind, können für alle Luftspulen am Statorkern gleich sein. Auch verschieden Nutsprünge können an einem Statorkern vorgesehen sein.

Die Schränkungen der Luftspulen, die an einem Statorkern angeordnet sind, können gleich oder verschieden sein.

Mit den Spulen kann am Statorkern eine Einschichtwicklung oder eine Mehrschichtwicklung hergestellt werden.

Es kann vorgesehen sein, eine Mehrschichtwicklung herzustellen, beispielweise eine Zweischichtwicklung oder eine n-Schichtwicklung (n>2). Hierfür kann das Verfahren adaptiert werden, derart, dass ein weiteres Werkzeugteil mit eigenem rotativen Freiheitsgrad vorgesehen wird. Die Prozessfolge zum Ausbilden der Schränkungen der Spulen untereinander ist gleich dem vorangehend beschriebenen Verfahren.

Das Verfahren kann auch ausgebildet sein, eine Einschichtwicklung herzustellen. An Stelle der Aufnahme der Luftspulen in den beiden Werkzeugteilen kann dann ein Bewickeln des außengenuteten Werkzeugs erfolgen. Das Bewickeln kann zum Beispiel durch ein Rotations-, ein Hub- und / oder ein Schwenkverfahren ausgeführt werden. Hierbei werden die Spulen nicht in einer Haltenut gefertigt, sondern es wird jeweils eine Spulenseite in eine Haltenut bewickelt. Der Schritt des Schränkens der Wicklung kann entfallen. Die Verlagerung der Spulen vom Werkzeug zum Statorkern erfolgt in der vorangehend beschriebenen Art und Weise.

Die Luftspulen können in einem Folgewickelverfahren hergestellt werden. Hierbei werden alle Luftspulen mit einem zusammenhängenden Wickeldraht hergestellt und montiert.

In Verbindung mit der Vorrichtung zum Herstellen des Stators mit Wicklung mit geschränkten Luftspulen können die vorangehend im Zusammenhang mit dem Verfahren erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines ersten Werkzeugteils eines Fertigungswerkzeugs sowie einer Luftspule mit elektrischer Isolierung;
- Fig. 2: eine schematische Darstellung einer Anordnung mit dem ersten Werkzeugteil aus Fig. 1 sowie einem zweiten Werkzeugteil des Fertigungswerkzeugs, wobei das erste Werkzeugteil in dem zweiten Werkzeugteil angeordnet ist;
- Fig. 3: eine schematische Darstellung der Anordnung aus Fig. 2, wobei Luftspulen teilweise aus dem ersten Werkzeugteil in das zweite Werkzeugteil verlagert sind;
- Fig. 4: eine schematische Darstellung der Anordnung aus Fig. 2, wobei Luftspulen geschränkt sind;
- Fig. 5: eine schematische Darstellung der Anordnung aus Fig. 2, wobei Luftspulen mit Schränkung nach radial innen in das erste Werkzeugteil verlagert sind;
- Fig. 6: eine schematische Darstellung des ersten Werkzeugteils mit hieran angeordneten Luftspulen mit Schränkung;
- Fig. 7: eine schematische Darstellung einer Anordnung mit dem ersten Werkzeugteil aus Fig. 6, wobei das erste Werkzeugteil in einem Statorkern angeordnet ist;
- Fig. 8: eine schematische Darstellung der Anordnung aus Fig. 7, wobei die Luftspulen mit Schränkung in Kernnuten des Statorkerns verlagert sind;
- Fig. 9: schematischen Darstellungen eines Stators mit Wicklung mit geschränkten Luftspulen;
- Fig. 10a bis 10d: schematische Darstellungen in Verbindung mit einer Ausführung zum herstellen von Luftspulen;
- Fig. 11a und 11b: schematische Darstellungen zum Übergeben von Luftspulen an eine Übergabekette;
- Fig. 12: eine schematische Darstellung zum Übergeben von Luftspulen aus der Übergabekette in ein erstes Werkzeugteil;
- Fig. 13: eine weitere schematische Darstellung in Verbindung mit dem Übergeben von Luftspulen aus der Übergabekette in das erste Werkzeugteil; und
- Fig. 14: eine schematische Darstellung zum Ausbilden einer Schränkung für die Luftspulen mittels der Übergabekette und dem ersten Werkzeugteil.

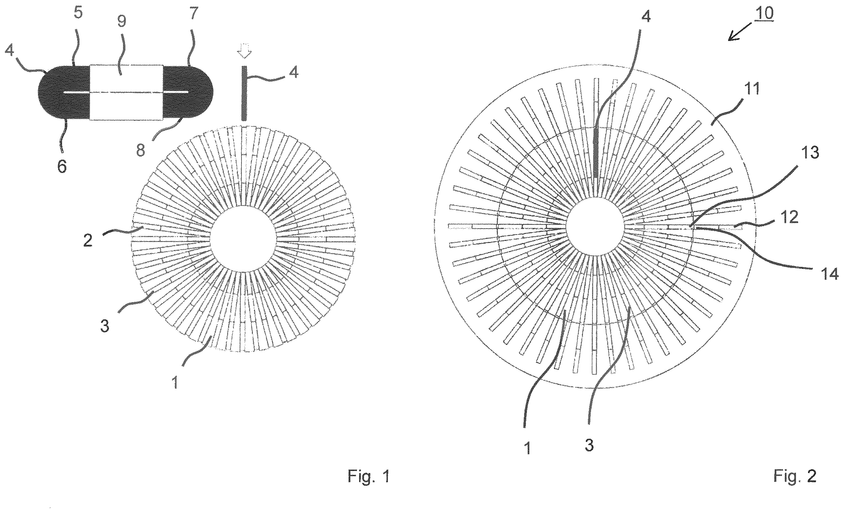

Fig. 1 zeigt eine schematische Darstellung eines ersten Werkzeugteils 1, welches eine erste Anordnung 2 mit Haltenuten 3 aufweist, die umlaufend auf einer ersten Kreisbahn angeordnet sind. Weiterhin ist in Fig. 1 eine Luftspule 4 schematisch dargestellt, die auf gegenüberliegenden Seiten 5, 6 einen ersten und einen zweiten Abschnitt 7, 8 aufweist. Im Bereich des ersten und des zweiten Abschnitts 7, 8 ist eine elektrische Isolierung 9 ausgebildet, beispielsweise mittels Isolierpapier.

Gemäß der Darstellung in Fig. 1 kann in den Haltenuten 3 jeweils eine Luftspule 4 angeordnet werden, derart, dass die Luftspule 4 vollständig in der zugeordneten Haltenut 3 aufgenommen ist. Zum Einschieben der jeweiligen Haltespule 4 kann beispielsweise ein Schiebeelement (nicht dargestellt) genutzt werden, welches die Luftspule 4 nach radial innen in die zugeordnete Haltenut 3 verlagert.

Fig. 2 zeigt eine schematische Darstellung einer Anordnung, bei der das erste Werkzeugteil 1 in einem Fertigungswerkzeug 10 in einem zweiten Werkzeugteil 11 angeordnet ist, derart, dass die Haltenuten 3 des ersten Werkzeugteils 1 jeweils eine Haltenut 12 des zweiten Werkzeugteils 11 gegenüberliegend angeordnet sind, so dass Haltenuten selbst und einander gegenüberliegende Nutöffnungen 13, 14, die sich in axialer Richtung in die Bildebene hinein erstrecken, miteinander fluchten. Die Haltenuten 12 des zweiten Werkzeugteils 11 sind ebenfalls umlaufend entlang einer Kreisbahn angeordnet.

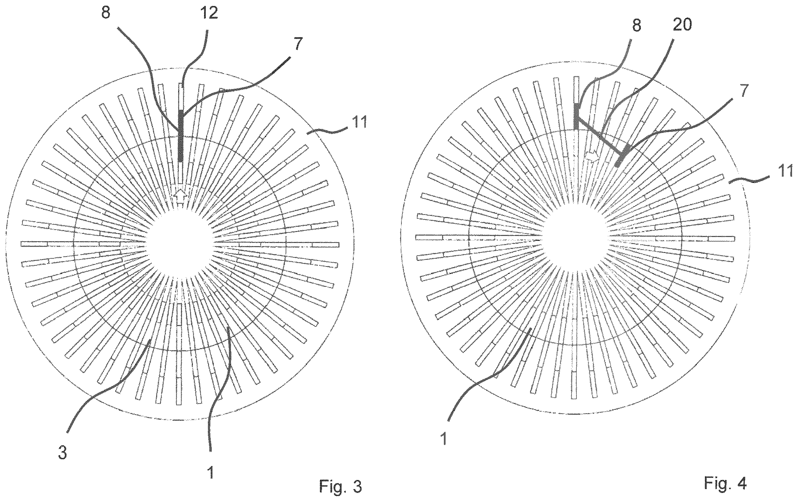

Gemäß der Darstellung in Fig. 3 werden die Luftspulen 4 nach radial außen verlagert, derart, dass jeweils der erste Abschnitt 7 innerhalb der Haltenut 12 in dem zweiten Werkzeugteil 11 und der zweite Abschnitt 8 innerhalb einer gegenüberliegenden Haltenut 3 in dem ersten Werkzeugteil 1 angeordnet ist. Die Radialverlagerung kann mit einem Schieberelement (nicht dargestellt) ausgeführt werden, wobei die Luftspulen 4 in den Haltenuten 3, 12 einzeln oder in Gruppen gleichzeitig radial verlagert werden können.

Gemäß der schematischen Darstellung in Fig. 4 werden dann das erste und das zweite Werkzeugteil 1, 11 relativ zueinander verdreht, um eine axiale Rotationsachse, sodass für die Luftspulen 4 eine Schränkung 20 ausgebildet ist.

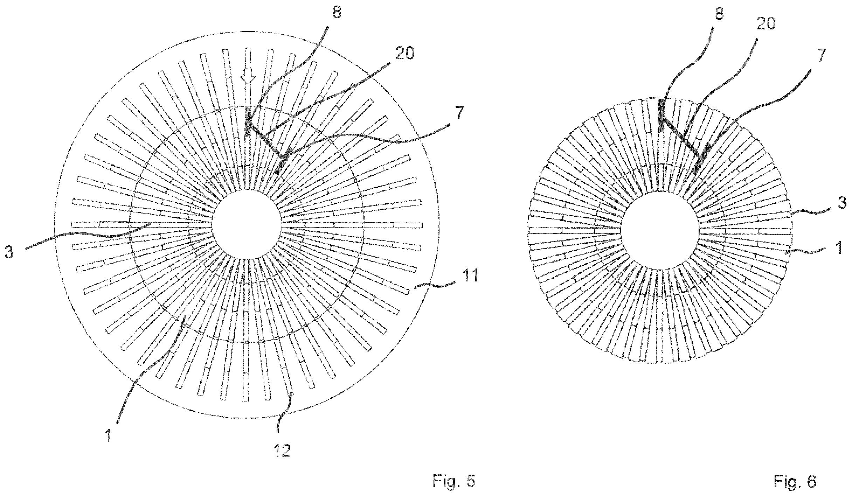

Gemäß Fig. 5 werden dann die Luftspulen 4 mit der Schränkung 20 nach radial innen in die Haltenuten 3 des ersten Werkzeugteils 1 verlagert, worauf das zweite Werkzeugteil 11 abgenommen wird, wie dies Fig. 6 zeigt.

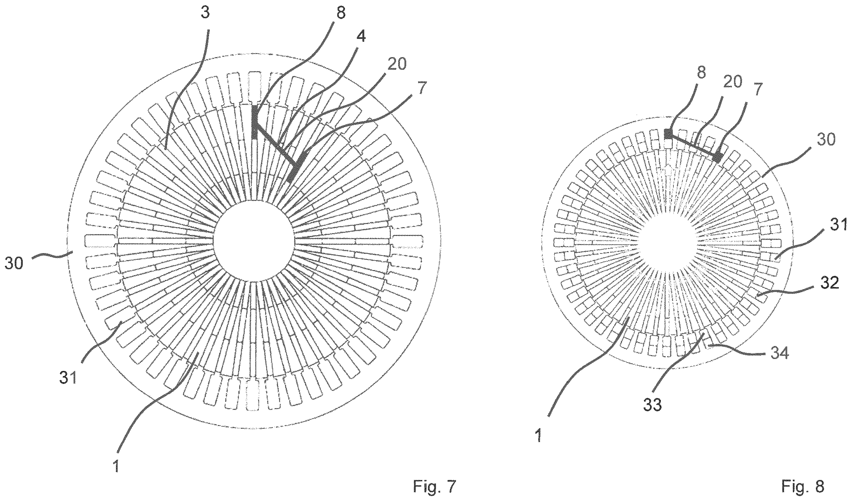

Gemäß Fig. 7 wird das erste Werkzeugteil 1 mit den in den Haltenuten angeordneten Luftspulen mit Schränkung 20 dann in einem Statorkern 30 angeordnet, der beispielsweise mit einem Blechpaket gebildet ist und Kernnuten 31 umlaufend aufweist, derart, dass die Kernnuten 31 gegenüber den Haltenuten 3 des ersten Werkzeugteils 1 angeordnet sind. Gemäß einer gegenüber Fig. 7 verkleinerten Darstellung in Fig. 8 werden dann die Luftspulen 4 mit der Schränkung 20 in die Kernnuten 31 des Statorkerns 30 übergeben oder verlagert, sodass eine Wicklung 32 für den Statorkern 30 ausgebildet wird, die gemäß der Darstellung in Fig. 8 mit einer radial innenliegenden Schicht 33 und einer radial außenliegenden Schicht 34 gebildet ist. Der erste und der zweite Abschnitt 7, 8 der Luftspule 4 sind hierbei in unterschiedlichen Kernnuten 31 angeordnet. Ein Nutsprung der Luftspule 4 erstreckt sich bei der gezeigten Ausführung über drei Kernnuten 31 hinweg. Je nach ausführungsform können die Nutsprünge verscheiden sein, wobei an einem Statorkern 31 alle Luftspulen 4 den gleichen Nutsprung erfassend ausgebildet sein können. Alternativ können Luftspulen 4 mit verschiedenen Nutsprüngen an einem Statorkern 31 vorgesehen sein.

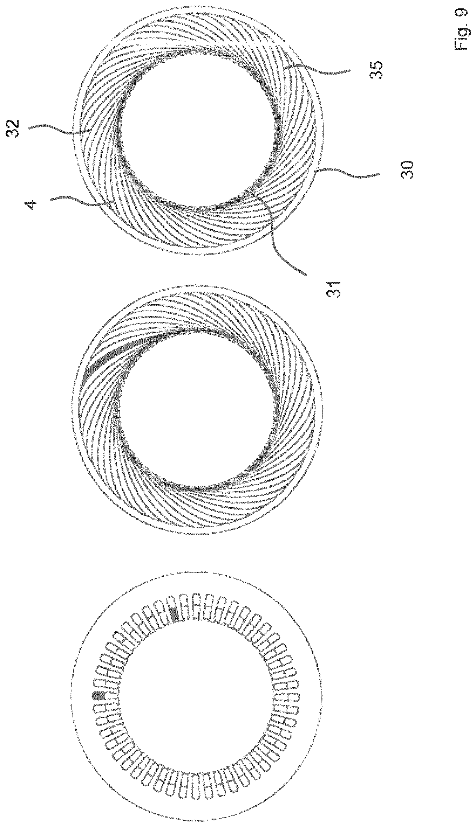

Fig. 9 zeigt eine schematische Darstellung eines Stators, der am Statorkern 30 zunächst nur einen Luftspule 4 (linke Darstellung) und dann die Wicklung 32 aufweist (rechte Darstellung), die dem vorangehend beschriebenen Verfahren hergestellt ist. Abschnitte 35 der Luftspulen 4 mit Schränkung 20 sind stirnseitig am Statorkern 30 außerhalb der Kernnuten angeordnet.

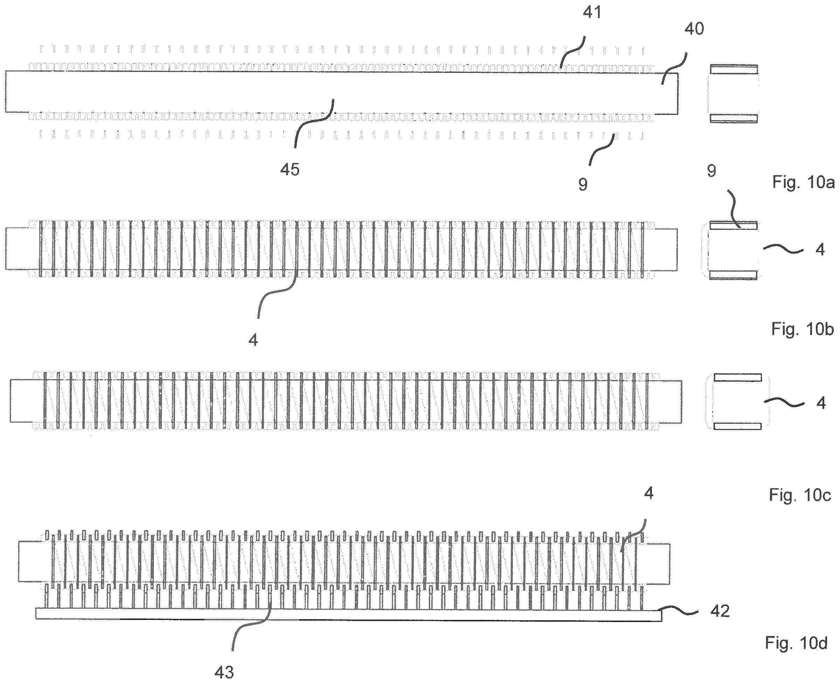

Fig. 10a bis 10d zeigen schematische Darstellungen in Verbindung mit einer weiteren Ausführung. Ein Wickelwerkzeug 40, welches bei der gezeigten Ausführung mit einem rechteckigen Querschnitt sowie einer geraden Längserstreckung (Strangform) gebildet ist, weist Haltenuten 41 auf. Gemäß Fig. 10a werden in den Haltenuten 41 elektrische Isolierungen 9 (Nutisolationen) eingebracht. Sodann werden die Luftspulen 4 mit jeweiliger Schränkung 20 gemäß Fig. 10b gewickelt auf dem Wickelwerkzeug 40.

Gemäß Fig. 10c wird die elektrische Isolierung 9 dann für die jeweiligen Luftspulen 4 geschlossen. Es wird gemäß Fig. 10d eine Gabelleiste 42, mit der ein Schiebewerkzeug gebildet ist, seitlich gegenüber dem Wickelwerkzeug 40 angeordnet, derart, dass Werkzeugvorsprünge 43 jeweils einer der Luftspulen 4 zugeordnet sind.

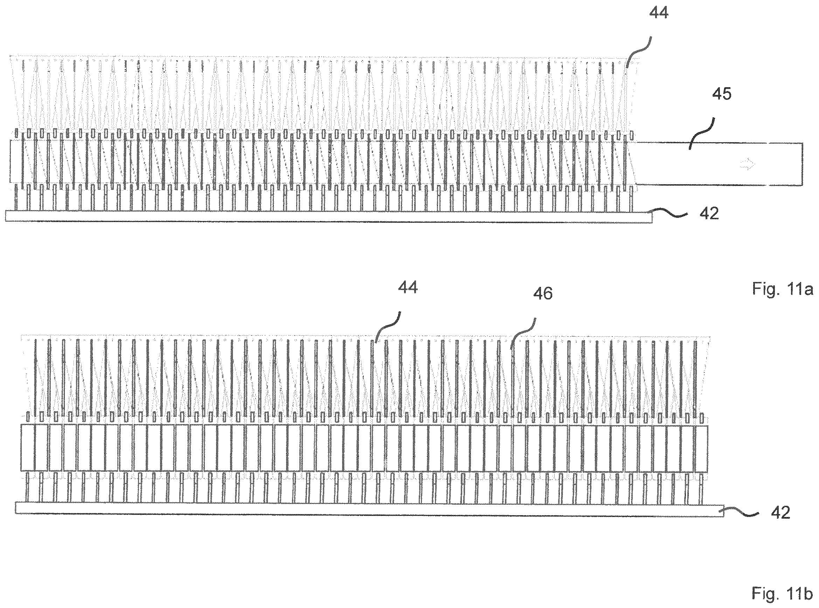

Fig. 11a und 11b zeigen schematisch die weitere Handhabung der Luftspulen 4. Gemäß Fig. 11a wird eine Übergabekette 44 das Wickelwerkzeug 40 herangeführt, um dann nach dem Entfernen eines Wickelwerkzeugkerns 45 gemäß Fig. 11b die Luftspulen 4 mittels der Gabelleiste 42 in Haltenuten 46 der Übergabekette 44 zu verlagern.

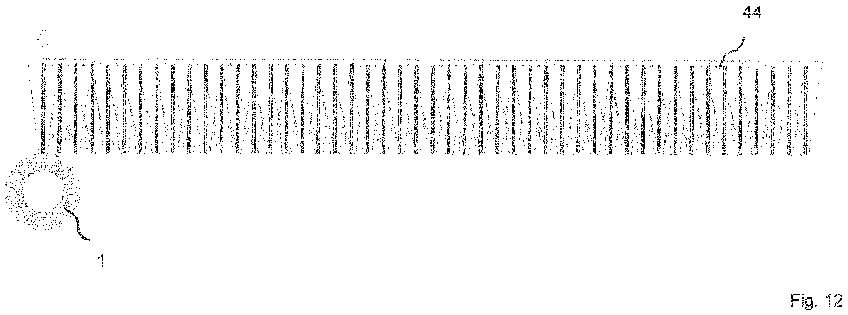

Gemäß Fig. 12 wird die Übergabekette 44 endseitig an dem ersten Werkzeugteil 1 mit den Haltenuten 3 angeordnet, derart, dass die Luftspule 4 in einer ersten der Haltenuten 41 der Übergabekette 44 in eine zugeordnete der Haltenuten 3 am ersten Werkzeugteil 1 verlagerbar ist.

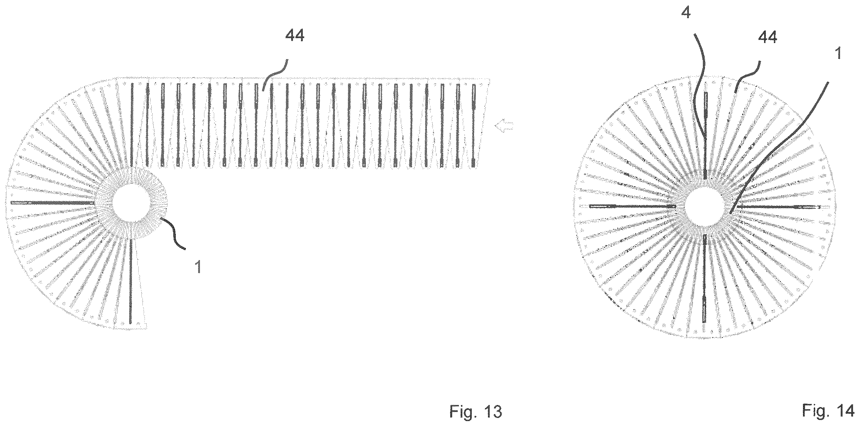

Gemäß Fig. 13 wird die Übergabekette 44 dann Stück für Stück um das erste Werkzeugteil 1 gelegt, um die Luftspulen 4 jeweils in die Haltenuten 3 zu verlagern. Hierbei kann vorgesehen, zunächst nur einen Schenkel der jeweiligen Luftspule 4 in das erste Werkzeugteil 1 zu verlagern und das erste Werkzeugteil 1 und die um dieses gelegte Übergabekette 44 relativ zueinander zu verdrehen, um die Schränkung 20 auszubilden (vgl. Fig. 14). Nachfolgend können die Luftspulen 4 mit Schränkung 20 ganz nach innen in das erste Werkzeugteil 1 verlagert werden. Die weitere Verarbeitung der Luftspulen 4 kann erfolgen wie dies oben in Verbindung mit den Fig. 6 ff. erläutert ist.

Alternativ können die Luftspulen 4 vor dem Ausbilden der Schränkung 20 aus der Übergabekette 44 vollständig in das erste Werkzeugteil 1 verlagert werden, um diese dann nach dem Verfahren zu verarbeiten wie dies oben unter Bezugnahme auf die Fig. 2 bis 5 erläutert wurde.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen eines Stators mit einer Wicklung mit geschränkten Luftspulen (4), mit:
- Wickeln von Luftspulen (4) mit Hilfe eines Wickelwerkzeugs;
- Anordnen der Luftspulen (4) in Haltenuten (3; 12; 46) eines Fertigungswerkzeugs (10), derart, dass bei den Luftspulen (4) jeweils ein erster Abschnitt (7) auf einer Seite (5) der Luftspule (4) in einer Haltenut (3) einer ersten Anordnung (2) von Haltenuten (3) an einem ersten Werkzeugteil (1) und ein zweiter Abschnitt (8) auf einer gegenüberliegenden Seite (6) der Luftspule (4) in einer Haltenut (12; 46) einer zweiten Anordnung von Haltenuten (12; 46) an einem zweiten Werkzeugteil (11; 44) angeordnet sind;
- Herstellen einer jeweiligen Schränkung (20) für die Luftspulen (4), indem das erste Werkzeugteil (1) und das zweite Werkzeugteil (11, 44) relativ zueinander verlagert werden;
- Verlagern der Luftspulen (4) mit Schränkung (20) in die Haltenuten (3) des ersten Werkzeugteils (1), derart, dass für die Luftspulen (4) mit Schränkung (20) der erste und der zweite Abschnitt (7, 8) jeweils in verschiedenen der Haltenuten (3) des ersten Werkzeugteils (1) angeordnet sind;
- Anordnen eines Statorkerns (30) mit Kernnuten (31), derart, dass die Kernnuten (31) jeweils einer Haltenut (3) des ersten Werkzeugteils (1) gegenüberliegend angeordnet werden;
- Verlagern der Luftspulen (4) mit Schränkung (20) aus den Haltenuten (3) des ersten Werkzeugteils (1) in jeweils zugeordnete Kernnuten (31) und
- Entnehmen des Statorkerns (30) mit den in den Kernnuten (31) angeordneten Luftspulen (4) mit Schränkung (20).

2. Verfahren nach Anspruch 1, **dadurch gekennzeichnet, dass** die ersten Abschnitte (7) auf der einen Seite (5) der Luftspulen (4) in Haltenuten einer ersten auf einer Kreisbahn umlaufenden Anordnung von Haltenuten an dem ersten Werkzeugteil (1) und die zweiten Abschnitte (8) auf der gegenüberliegenden Seite (6) der Luftspule (4) in Haltenuten einer zweiten auf einer Kreisbahn umlaufenden Anordnung von Haltenuten (12) an dem zweiten Werkzeugteil (11; 44) angeordnet werden.

3. Verfahren nach Anspruch 1 oder 2, **dadurch gekennzeichnet, dass** die Luftspulen (4) beim Anordnen der Luftspulen (4) in den Haltenuten (3; 12; 46) des Fertigungswerkzeugs (10) in radialer Richtung verlagert werden.

4. Verfahren nach mindestens einem der vorangehenden Ansprüche, **dadurch gekennzeichnet, dass** beim Anordnen der Luftspulen (4) in den Haltenuten (3; 12; 46) des Fertigungswerkzeugs (10) die Haltenuten (3) des ersten Werkzeugteils (1) und die Haltenuten (12) des zweiten Werkzeugteils (11; 44) einander paarweise zugeordnet werden.

5. Verfahren nach mindestens einem der vorangehenden Ansprüche, **dadurch gekennzeichnet, dass** beim Anordnen der Luftspulen (4) in den Haltenuten (3; 12; 46) des Fertigungswerkzeugs (10) die Haltenuten (3) des ersten Werkzeugteils (1) und die Haltenuten (12) des zweiten Werkzeugteils (11; 44) im Wesentlichen spaltfrei einander gegenüberliegend angeordnet werden.

6. Verfahren nach mindestens einem der vorangehenden Ansprüche, **dadurch gekennzeichnet, dass** das erste Werkzeugteil (1) und das zweite Werkzeugteil (11) in dem Fertigungswerkzeug (10) mittels Relativverlagerung in axialer Richtung zusammengefügt werden.

7. Verfahren nach mindestens einem der vorangehenden Ansprüche, **dadurch gekennzeichnet, dass** beim Anordnen des Statorkerns (30) der Statorkern (30) und das erste Werkzeugteil (1) in axialer Richtung relativ zueinander verlagert werden.

8. Verfahren nach mindestens einem der vorangehenden Ansprüche, **dadurch gekennzeichnet, dass** das erste Werkzeugteil (1) und das zweite Werkzeugteil (11; 44 45) beim Herstellen der jeweiligen Schränkung (20) für die Luftspulen (4) um eine Rotationsachse relativ zueinander gedreht werden.

9. Verfahren nach mindestens einem der vorangehenden Ansprüche, **dadurch gekennzeichnet, dass** die Luftspulen (4) mit Schränkung (20) in den Kernnuten (31) gegenüber dem Statorkern (30) elektrisch isoliert werden.

10. Verfahren nach mindestens einem der vorangehenden Ansprüche, **dadurch gekennzeichnet, dass** die Luftspulen (4) vor dem Ausbilden der Schränkung (20) mit einer elektrischen Isolierung (9) versehen und in den Haltenuten (3; 12; 46) des Fertigungswerkzeugs (10) mit der elektrischen Isolierung (9) eingebracht werden.

11. Verfahren nach mindestens einem der vorangehenden Ansprüche, **dadurch gekennzeichnet, dass** der erste und / oder der zweite Abschnitt (7, 8) der Luftspule (4) mit Schränkung (20) nach dem Verlagern in die Kernnuten (31) in diesen verformt werden.

12. Verfahren nach mindestens einem der vorangehenden Ansprüche, **dadurch gekennzeichnet, dass** in den Kernnuten (31) mittels der Luftspulen (4) mit Schränkung (20) eine Zweischichtwicklung ausgebildet wird.

13. Verfahren nach mindestens einem der vorangehenden Ansprüche, **dadurch gekennzeichnet, dass** als zweites Werkzeugteil eine Übergabekette (44) verwendet wird, bei der die zweite Anordnung von Haltenuten (46) zwischen einer geradlinigen Anordnung und einer radial umlaufenden Anordnung verlagerbar ist.

14. Verfahren nach mindestens einem der vorangehenden Ansprüche, **dadurch gekennzeichnet, dass** mit den Spulen (4) am Statorkern (30) eine Einschichtwicklung oder eine Mehrschichtwicklung hergestellt wird.

15. Vorrichtung zum Herstellen eines Stators mit einer Wicklung mit geschränkten Luftspulen, mit:
- einem Wickelwerkzeug, weiches eingerichtet ist, Luftspulen (4) zu wickeln; und
- einem Fertigungswerkzeug mit einem ersten Werkzeugteil (1) und einem zweiten Werkzeugteil (11; 44), wobei das Fertigungswerkzeug eingerichtet ist,
- Luftspulen (4) in Haltenuten (3; 12; 46) aufzunehmen, derart, dass bei den Luftspulen (4) jeweils ein erster Abschnitt (7) auf einer Seite (5) der Luftspule (4) in einer Haltenut (3) einer ersten Anordnung (2) von Haltenuten (3) an einem ersten Werkzeugteil (1) und ein zweiter Abschnitt (8) auf einer gegenüberliegenden Seite (6) der Luftspule (4) in einer Haltenut (12; 46) einer zweiten Anordnung von Haltenuten (12; 46) an einem zweiten Werkzeugteil (11; 44) angeordnet sind;
- für die Luftspule (4) eine jeweilige Schränkung (20) auszubilden, indem das erste Werkzeugteil (1) und das zweite Werkzeugteil (11; 44) relativ zueinander verlagerbar sind;
- die Luftspulen (4) mit Schränkung (20) in die Haltenuten (3) des ersten Werkzeugteils (1) zu verlagern, derart, dass für die Luftspulen (4) mit Schränkung (20) der erste und der zweite Abschnitt (7, 8) jeweils in verschiedenen der Haltenuten (3) des ersten Werkzeugteils (1) angeordnet sind;
- Kernnuten (31) eines Statorkerns (30) jeweils einer Haltenut (3) des ersten Werkzeugteils (1) gegenüberliegend anzuordnen;
- die Luftspulen (4) mit Schränkung (20) aus den Haltenuten (3) des ersten Werkzeugteils (1) in jeweils zugeordnete Kernnuten (31) zu verlagern und
- den Statorkern (30) mit den in den Kernnuten (31) angeordneten Luftspulen (4) mit Schränkung (20) zu entnehmen.

## Claims

1. Method for producing a stator with a winding with offset air-core coils (4), comprising:
- winding air-core coils (4) with the aid of a winding tool;
- arranging the air-core coils (4) in retaining grooves (3; 12; 46) of a production tool (10) in such a way that, for each air-core coil (4) respectively, a first section (7) on one side (5) of the air-core coil (4) is arranged in a retaining groove (3) of a first arrangement (2) of retaining grooves (3) on a first tool part (1) and a second section (8) on an opposite side (6) of the air-core coil (4) is arranged in a retaining groove (12; 46) of a second arrangement of retaining grooves (12; 46) on a second tool part (11; 44);
- producing a respective offset (20) for the air-core coils (4), in that the first tool part (1) and the second tool part (11, 44) are displaced relative to each other;
- displacing the air-core coils (4) with offset (20) into the retaining grooves (3) of the first tool part (1) in such a way that, for the air-core coils (4) with the offset (20), the first and the second sections (7, 8) are respectively arranged in different retaining grooves (3) of the first tool part (1);
- arranging a stator core (30) with core slots (31) in such a way that the core slots (31) are respectively arranged opposite a retaining groove (3) of the first tool part (1);
- displacing the air-core coils (4) with offset (20) from the retaining grooves (3) of the first tool part (1) into the respectively assigned core slots (31); and
- removing the stator core (30) with the air-core coils (4) with offset (20) arranged in the core slots (31).

2. Method according to claim 1, **characterized in that** the first sections (7) on the one side (5) of the air-core coils (4) are arranged in retaining grooves of a first arrangement of retaining grooves arranged in a circular path on the first tool part (1) and the second sections (8) on the opposite side (6) of the air-core coil (4) are arranged in retaining grooves of a second arrangement of retaining grooves (12) arranged in a circular path on the second tool part (11; 44).

3. Method according to claim 1 or 2, **characterized in that** the air-core coils (4) are displaced in the radial direction during the arrangement of the air-core coils (4) in the retaining grooves (3; 12; 46) of the production tool (10).

4. Method according to at least one of the preceding claims, **characterized in that**, during the arrangement of the air-core coils (4) in the retaining grooves (3; 12; 46) of the production tool (10), the retaining grooves (3) of the first tool part (1) and the retaining grooves (12) of the second tool part (11; 44) are assigned to each other in pairs.

5. Method according to at least one of the preceding claims, **characterized in that**, during the arrangement of the air-core coils (4) in the retaining grooves (3; 12; 46) of the production tool (10), the retaining grooves (3) of the first tool part (1) and the retaining grooves (12) of the second tool part (11; 44) are arranged opposite each other substantially without a gap.

6. Method according to at least one of the preceding claims, **characterized in that** the first tool part (1) and the second tool part (11) are joined together in the production tool (10) by means of relative displacement in the axial direction.

7. Method according to at least one of the preceding claims, **characterized in that**, during the arrangement of the stator core (30), the stator core (30) and the first tool part (1) are displaced relative to each other in the axial direction.

8. Method according to at least one of the preceding claims, **characterized in that** the first tool part (1) and the second tool part (11; 44; 45) are rotated relative to each other about an axis of rotation during the production of the respective offset (20) for the air-core coils (4).

9. Method according to at least one of the preceding claims, **characterized in that** the air-core coils (4) with offset (20) are electrically insulated in the core slots (31) with respect to the stator core (30).

10. Method according to at least one of the preceding claims, **characterized in that** the air-core coils (4) are provided with electrical insulation (9) prior to forming the offset (20) and are inserted in the retaining grooves (3; 12; 46) of the production tool (10) with the electrical insulation (9).

11. Method according to at least one of the preceding claims, **characterized in that** the first and/or the second sections (7, 8) of the air-core coils (4) with offset (20) is/are deformed in the core slots (31) after displacement into the same.

12. Method according to at least one of the preceding claims, **characterized in that** a two-layer winding is formed in the core slots (31) by means of the air-core coils (4) with offset (20).

13. Method according to at least one of the preceding claims, **characterized in that** a transfer chain (44) is used as the second tool part, by means of which the second arrangement of retaining grooves (46, 44) can be displaced between a straight-line arrangement and a radially circumferential arrangement.

14. Method according to at least one of the preceding claims, **characterized in that** a single-layer winding or a multilayer winding is produced using the coils (4) on the stator core (30).

15. Device for producing a stator with a winding with offset air-core coils, comprising:
- a winding tool which is configured to wind air-core coils (4); and
- a production tool having a first tool part (1) and a second tool part (11; 44), wherein the production tool is configured:
- to accommodate air-core coils (4) in retaining grooves (3; 12; 46) in such a way that, for each air-core coil (4) respectively, a first section (7) on one side (5) of the air-core coil (4) is arranged in a retaining groove (3) of a first arrangement (2) of retaining grooves (3) on a first tool part (1) and a second section (8) on an opposite side (6) of the air-core coil (4) is arranged in a retaining groove (12; 46) of a second arrangement of retaining grooves (12; 46) on a second tool part (11; 44);
- to form a respective offset (20) for the air-core coil (4), in that the first tool part (1) and the second tool part (11; 44) are displaced relative to each other;
- to displace the air-core coils (4) with offset (20) into the retaining grooves (3) of the first tool part (1) in such a way that, for the air-core coils (4) with the offset (20), the first and the second sections (7, 8) are respectively arranged in different retaining grooves (3) of the first tool part (1);
- to arrange core slots (31) of a stator core (30) respectively opposite a retaining groove (3) of the first tool part (1);
- to displace the air-core coils (4) with offset (20) from the retaining grooves (3) of the first tool part (1) into the respectively assigned core slots (31); and
- to remove the stator core (30) with the air-core coils (4) with offset (20) arranged in the core slots (31).

## Revendications

1. Procédé de fabrication d'un stator comportant un enroulement avec des bobines à air en décalage (4), comportant :
- l'enroulement de bobines à air (4) à l'aide d'un outil de bobinage ;
- la disposition des bobines à air (4) dans des rainures de retenue (3 ; 12 ; 46) d'un outil de fabrication (10) de manière à ce que, sur les bobines à air (4), respectivement une première section (7) soit disposée sur une première face (5) de la bobine à air (4) dans une rainure de retenue (3) d'un premier agencement (2) de rainures de retenue (3) au niveau d'une première pièce d'outil (1) et une seconde section (8) sur une face opposée (6) de la bobine à air (4) dans une rainure de retenue (12 ; 46) d'un second agencement de rainures de retenue (12 ; 46) au niveau d'une seconde pièce d'outil (11 ; 44) ;
- fabrication d'un décalage respective (20) pour les bobines à air (4) en déplaçant la première pièce d'outil (1) et la seconde pièce d'outil (11,44) l'une par rapport à l'autre ;
- déplacement des bobines à air (4) avec le décalage (20) dans les rainures de retenue (3) de la première pièce d'outil (1) de manière à ce que, pour les bobines à air (4) dotées d'un décalage (20), les première et seconde sections (7, 8) soient disposées respectivement dans une diversité de rainures de retenue (3) de la première pièce d'outil (1) ;
- disposition d'un noyau de stator (30) doté de rainures de noyau (31) de manière à ce que les rainures de noyau (31) respectivement d'une rainure de retenue (3) de la première pièce d'outil (1) soient disposées face-à-face ;
- déplacement des bobines à air (4) avec le décalage (20) depuis les rainures de retenue (3) de la première pièce d'outil (1) dans des rainures de noyau respectivement associées (31) et
- retrait du noyau de stator (30) avec les bobines à air (4) disposées dans les rainures de noyau (31) avec le décalage (20).

2. Procédé selon la revendication 1, **caractérisé en ce que** les premières sections (7) sont disposées sur une face (5) des bobines à air (4) dans des rainures de retenue d'un premier agencement tournant sur une bande circulaire de rainures de retenue au niveau de la première pièce d'outil (1) et les secondes sections (8) sur la face opposée (6) de la bobine à air (4) dans des rainures de retenue d'un second dispositif tournant sur une bande circulaire de rainures de retenue (12) au niveau de la seconde pièce d'outil (11 ; 44).

3. Procédé selon la revendication 1 ou 2, **caractérisé en ce que** les bobines à air (4), lors de la disposition des bobines à air (4) dans les rainures de retenue (3 ; 12 ; 46) de l'outil de fabrication (10), sont déplacées dans le sens radial.

4. Procédé selon au moins une des revendications précédentes, **caractérisé en ce que**, lors de la disposition des bobines à air (4) dans les rainures de retenue (3 ; 12 ; 46) de l'outil de fabrication (10), les rainures de retenue (3) de la première pièce d'outil (1) et les rainures de retenue (12) de la seconde pièce d'outil (11 ; 44) sont associées par paires les unes aux autres.

5. Procédé selon au moins une des revendications précédentes, **caractérisé en ce que**, lors de la disposition des bobines à air (4) dans les rainures de retenue (3 ; 12 ; 46) de l'outil de fabrication (10), les rainures de retenue (3) de la première pièce d'outil (1) et les rainures de retenue (12) de la seconde pièce d'outil (11 ; 44) sont sensiblement disposées face-à-face sans intervalle.

6. Procédé selon au moins une des revendications précédentes, **caractérisé en ce que** la première pièce d'outil (1) et la seconde pièce d'outil (11) sont assemblées dans l'outil de fabrication (10) au moyen d'un déplacement relatif dans le sens axial.

7. Procédé selon au moins une des revendications précédentes, **caractérisé en ce que**, lors de la disposition du noyau de stator (30), le noyau de stator (30) et la première pièce d'outil (1) sont déplacés l'un par rapport à l'autre dans le sens axial.

8. Procédé selon au moins une des revendications précédentes, **caractérisé en ce que** la première pièce d'outil (1) et la seconde pièce d'outil (11 ; 44 ; 45) sont tournées l'une par rapport à l'autre lors de la mise en place de le décalage respective (20) pour les bobines à air (4) autour d'un axe de rotation.

9. Procédé selon au moins une des revendications précédentes, **caractérisé en ce que** les bobines à air (4) dotées d'un décalage (20) dans les rainures de noyau (31) sont isolées électriquement du noyau de stator (30).

10. Procédé selon au moins une des revendications précédentes, **caractérisé en ce que** les bobines à air (4), lors de la mise en place du décalage (20), sont pourvues d'une isolation électrique (1) et installées dans les rainures de retenue (3 ; 12 ; 46) de l'outil de fabrication (10) avec l'isolant électrique (9).

11. Procédé selon au moins une des revendications précédentes, **caractérisé en ce que** la première et/ou la seconde section (7, 8) de la bobine à air (4) avec le décalage (20), après leur déplacement dans les rainures de noyau (31), sont déformées dans celles-ci.

12. Procédé selon au moins une des revendications précédentes, **caractérisé en ce que**, dans les rainures de noyau (31), au moyen des bobines à air (4) dotées d'un décalage (20), un enroulement à deux couches est constitué.

13. Procédé selon au moins une des revendications précédentes, **caractérisé en ce qu'**on utilise comme seconde pièce d'outil une chaîne de transfert (44) dans laquelle le second agencement de rainures de retenue (46,44) est permutable entre un agencement rectiligne et un agencement tournant radialement.

14. Procédé selon au moins une des revendications précédentes, **caractérisé en ce que**, avec les bobines (4), au niveau du noyau de stator (30), un enroulement à une couche ou un enroulement à couches multiples est réalisé.

15. Dispositif de fabrication d'un stator doté d'un enroulement avec des bobines à air en décalage, comportant :
- un outil d'enroulement qui est conçu pour enrouler des bobines à air (4) ; et
- un outil de fabrication comportant une première pièce d'outil (1) et une seconde pièce d'outil (11 ; 44), l'outil de fabrication étant conçu pour
- recevoir des bobines à air (4) dans des rainures de retenue (3 ; 12 ; 46) de manière à ce que, dans les bobines à air (4), respectivement une première section soit disposée (7) sur une face (5) de la bobine à air (4) dans une rainure de retenue (3) d'un premier agencement (2) de rainures de retenue (3) au niveau d'une première pièce d'outil (1) et une seconde section (8) sur une face opposée (6) de la bobine à air (4) dans une rainure de retenue (12 ; 46) d'un second agencement de rainures de retenue (12 ; 46) au niveau d'une seconde pièce d'outil (11 ; 44) ;
- mettre en place pour la bobine à air (4) un décalage respective (20) du fait que la première pièce d'outil (1) et la seconde pièce d'outil (11 ; 44) sont déplaçables l'une par rapport à l'autre ;
- déplacer les bobines à air (4) avec le décalage (20) dans les rainures de retenue (3) de la première pièce d'outil (1) de manière à ce que, pour les bobines à air (4) en décalage (20), les premières et seconde sections (7, 8) soit disposées respectivement dans une diversité de rainures de retenue (3) de la première pièce d'outil (1) ;
- disposer les rainures de noyau (31) d'un noyau de stator (30) respectivement d'une rainure de retenue (3) de la première pièce d'outil (1) face-à-face ;
- déplacer les bobines à air (4) avec le décalage (20) depuis les rainures de retenue (3) de la première pièce d'outil (1) dans des rainures de noyau respectivement associées (31) et
- retirer le noyau de stator (30) avec les bobines à air (4) disposées dans les rainures de noyau (31) avec le décalage (20).
